# FASCICULE DE BREVET EUROPEEN

(11) **EP 2 738 366 B1**
(45) Date de publication et mention de la délivrance du brevet: **21.10.2015**
(21) Numéro de dépôt: 13194064.5
(22) Date de dépôt: 22.11.2013
(51) Int. Cl.: F01N 3/10, F01N 3/20

(54) **Système SCR et méthode pour sa purge**
SCR-System und Verfahren zu dessen Spülung
SCR system and method for its purge

(30) Priorité: 28.11.2012 FR 1261346
(43) Date de publication de la demande: 04.06.2014
(73) Titulaire: Inergy Automotive Systems Research (Société Anonyme), 1120 Bruxelles (BE)
(72) Inventeur: Jannot, Frédéric, 1470 Bousval (BE); Dhaussy, Franck, 60280 Margny-les-Compiegne (FR); Leonard, Stephane, 1090 Brussels (BE)
(74) Mandataire: Remy, Vincent Noel Paul

(56) Documents cités:
- EP-A1- 2 447 490
- DE-A1-102008 000 594
- DE-A1-102008 009 650
- DE-A1-102011 014 026

## Description

La présente invention concerne un système SCR et une méthode pour la purge d'un tel système.
Les législations sur les émissions des véhicules et poids lourds prévoient entre autres une diminution des rejets d'oxydes d'azote NOₓ dans l'atmosphère.
Pour atteindre cet objectif on connaît le procédé SCR (Selective Catalytic Reduction) qui permet la réduction des oxydes d'azote par injection d'un agent réducteur, généralement d'ammoniac, dans la ligne d'échappement. Cet ammoniac peut provenir de la décomposition par thermolyse d'une solution d'un précurseur d'ammoniac dont la concentration peut être celle de l'eutectique. Un tel précurseur d'ammoniac est généralement une solution d'urée.

Avec le procédé SCR, les dégagements élevés de NOₓ produits dans le moteur lors d'une combustion à rendement optimisé sont traités en sortie du moteur dans un catalyseur. Ce traitement requiert l'utilisation de l'agent de réduction à un niveau de concentration précis et dans une qualité extrême. La solution est ainsi précisément dosée et injectée dans le flux de gaz d'échappement où elle est hydrolysée avant de convertir l'oxyde d'azote (NOₓ) en azote (N₂) et en eau (H₂O).
Pour ce faire, il est nécessaire d'équiper les véhicules d'un réservoir contenant une solution d'additif (urée généralement), ainsi que d'un dispositif pour doser et injecter la quantité d'additif désirée dans la ligne d'échappement.

Etant donné que la solution aqueuse d'urée généralement utilisée à cette fin (eutectique à 32.5 % en poids d'urée) gèle à -11°C, il est nécessaire de prévoir un dispositif de chauffage pour liquéfier la solution afin de pouvoir l'injecter dans la ligne d'échappement en cas de démarrage dans des conditions de gel.

En outre, en vue de faciliter le fonctionnement, le redémarrage du système en cas de gel et d'éviter l'éclatement des tuyaux souvent flexibles qui véhiculent l'urée, il est avantageux de purger les canalisations à la fin du fonctionnement du système. En particulier, il est avantageux de purger la ligne d'injection (aussi appelé canal d'injection) reliant le réservoir à additif à l'injecteur.
Dans l'art antérieur, plusieurs dispositifs de purge ont été prévus à cet effet.

Par exemple, il a été proposé un système SCR où la purge de la ou des ligne(s) a lieu par aspiration des gaz d'échappement à travers l'injecteur à l'aide de la pompe du système qui à cet effet soit tourne en sens inverse soit est associée à une vanne permettant d'inverser le débit. Ainsi, ce type de dispositif de purge connu nécessite soit une pompe bidirectionnelle (ou deux pompes tournant chacune dans un sens distinct de l'autre) soit une vanne 4/2 voies commandée électriquement par un calculateur. Ce type de dispositif connu est particulièrement complexe et coûteux. Un tel dispositif est divulgué par exemple dans le document DE 10 2008 009 650 A.
La présente invention vise à résoudre ce problème en proposant un dispositif de purge d'une grande simplicité qui permette de réaliser la purge du canal d'injection et/ou de l'injecteur de façon efficace.

Dès lors, la présente invention concerne un système pour le stockage et l'injection d'un additif dans les gaz d'échappement d'un moteur à combustion interne, ledit système comprenant un réservoir pour le stockage de l'additif, un injecteur et une pompe pour véhiculer l'additif du réservoir à l'injecteur via un canal d'injection, ledit système comprenant également un dispositif de purge monté entre la pompe et le canal d'injection. Le dispositif de purge est tel qu'il comprend un boîtier délimitant au moins une chambre et un équipage mobile à piston monté coulissant dans la chambre, le dispositif de purge étant conçu de sorte que :
- le mouvement de l'équipage mobile selon l'un des sens de coulissement entraîne l'ouverture dans la chambre d'un passage pour l'additif vers le canal d'injection, et
- le mouvement de l'équipage mobile selon l'autre sens de coulissement crée une aspiration au sein de la chambre qui se traduit par une remontée dans la chambre d'au moins une partie de l'additif contenu dans le canal d'injection.

L'additif dont il est question dans le cadre de l'invention est de préférence un agent réducteur susceptible de réduire les NOx présents dans les gaz d'échappement des moteurs à combustion interne. Il s'agit avantageusement d'ammoniac utilisé directement (ce qui présente les inconvénients de sécurité et de corrosion associés) ou généré in situ, dans les gaz d'échappement au départ d'un précurseur tel que l'urée (ce qui permet d'éviter les inconvénients précités). L'invention donne de bons résultats avec l'urée et en particulier, avec les solutions aqueuses d'urée. Les solutions eutectiques (comprenant 32.5% en poids d'urée) conviennent bien.

La présente invention peut être appliquée à tout moteur à combustion interne susceptible de générer des NOx dans ses gaz d'échappement.

Le système selon l'invention comprend au moins un réservoir destiné au stockage de l'additif et au moins un canal (ou ligne) d'injection destiné à amener l'additif vers un tuyau d'échappement du moteur. Ce canal est muni en son extrémité, d'un injecteur permettant l'injection de l'additif dans les gaz d'échappement.

Le système selon l'invention comprend également une pompe pour amener l'additif du réservoir à additif vers l'injecteur. Cette pompe peut être située dans le réservoir à additif (avec comme avantage de constituer avec lui, un module compact et intégré) ou, compte tenu de l'environnement corrosif, être situé en dehors du réservoir à additif. Ses matériaux constitutifs seront de préférence choisis parmi les métaux résistant à la corrosion (certains grades d'acier inoxydable et d'aluminium notamment).
Le plus souvent, le système selon l'invention comprend un calculateur relié à l'injecteur et permettant d'injecter dans les gaz d'échappement, la quantité d'additif requise (notamment en fonction des paramètres suivants : taux d'émission et de conversion des NOx; température et pression; vitesse et charge du moteur...).

Le dispositif de purge selon l'invention repose sur l'utilisation d'un équipage mobile à piston monté coulissant dans une chambre. La chambre comprend avantageusement une entrée communiquant avec la pompe et une sortie communiquant avec le canal d'injection. L'équipage mobile est susceptible d'effectuer une course aller suivant un premier sens de coulissement et une course retour suivant un deuxième sens de coulissement (opposé au premier sens). Pendant sa course aller, l'équipage mobile met en communication l'entrée et la sortie de la chambre. Ainsi, l'additif fourni par la pompe peut circuler vers le canal d'injection. Pendant sa course retour, l'équipage mobile ferme la communication entre l'entrée et la sortie de la chambre et crée une aspiration au sein de la chambre. Ceci se traduit par une remontée dans la chambre de l'additif contenu dans le canal d'injection. Une purge partielle est donc réalisée sous l'effet du déplacement de l'équipage mobile dans la chambre. De manière préférentielle, lors d'une purge la pompe est arrêtée et l'injecteur est ouvert. L'arrêt de la pompe et l'ouverture de l'injecteur se fait de manière séquentielle.

Préférentiellement, on arrête la pompe, on relâche la pression, puis on ouvre l'injecteur.

La commande de déplacement de l'équipage mobile est automatique et entièrement mécanique. Comme on le verra dans la suite de ce document, l'équipage mobile peut se déplacer suivant le deuxième sens de coulissement, sous l'action de poussée appliquée par un élément élastique d'accumulation et de restitution d'énergie. Dès lors, la présente invention propose un dispositif de purge « passif », c'est-à-dire un dispositif de purge qui fonctionne sans aucune alimentation électrique ni aucun signal de commande en provenance du calculateur (ou une autre unité de contrôle).
Dans la présente invention, la purge est initiée à l'arrêt du moteur, et plus particulièrement à l'arrêt de la pompe. Dans une configuration avantageuse de l'invention, lorsque la pompe est en marche l'additif pénètre dans la chambre et pousse l'équipage mobile selon le premier sens de coulissement. Lorsqu'on arrête la pompe, l'équipage mobile de l'invention amorce son déplacement selon le deuxième sens de coulissement (opposé au premier sens). Ensuite, on ouvre l'injecteur pour admettre de l'air dans le canal d'injection et ainsi permettre à l'équipage mobile de poursuivre sa course (course retour) selon le deuxième sens de coulissement. La commande de déplacement de l'équipage mobile est donc simple et automatique. En effet, le sens de déplacement de l'équipage mobile est conditionné par l'état de fonctionnement de la pompe (marche/arrêt) et de l'injecteur (ouvert/fermé). La durée entre l'instant où l'on arrête la pompe et l'instant où l'on ouvre l'injecteur est de préférence très court.

Selon un mode de réalisation particulièrement avantageux, l'équipage mobile comprend un piston monté coulissant dans la chambre à l'encontre d'au moins un ressort. Le dispositif de purge selon l'invention est donc simple à fabriquer et facile à monter. Il a également pour avantage d'avoir un faible encombrement.

Le piston est préférentiellement étanche. Le piston est monté dans la chambre de manière à être susceptible de délimiter un premier volume et un deuxième volume dans la chambre. Le mouvement du piston selon l'un des sens de coulissement entraîne simultanément l'augmentation du premier volume de la chambre et la diminution du deuxième volume de la chambre, et inversement lors d'un mouvement du piston selon l'autre sens de coulissement. Dans un mode de réalisation particulier, le ressort comprend une première extrémité solidaire d'au moins une partie du piston et une deuxième extrémité solidaire d'au moins une partie du boîtier (délimitant la chambre). Lorsque la pompe est en marche l'additif pénètre dans le premier volume de la chambre et pousse le piston selon l'un des sens de coulissement. Le mouvement du piston selon l'un des sens de coulissement entraîne la contraction du ressort (le ressort accumule de l'énergie). Lorsqu'on arrête la pompe, le ressort tend à reprendre sa forme d'origine (le ressort restitue l'énergie accumulée). Le piston est alors repoussé suivant l'autre sens de coulissement. Sous l'effet du déplacement du piston suivant l'autre sens de coulissement, le piston étanche agit comme une seringue, et l'additif contenu dans le canal d'injection est aspiré dans le deuxième volume de la chambre. Ensuite, on ouvre l'injecteur pour admettre de l'air dans le canal d'injection. Le volume d'air aspiré via le canal d'injection est sensiblement égal au deuxième volume déplacé par le piston dans la chambre. De cette façon, la purge du canal d'injection (et de l'injecteur) peut être réalisée au moins partiellement et rapidement.

Avantageusement, l'ensemble formé par le piston et le ressort est dimensionné de telle sorte qu'il compense les pulsations pouvant être générées par la pompe et/ou l'injecteur. Ainsi, cet ensemble piston/ressort agit comme un amortisseur hydraulique.

Dans un mode de réalisation avantageux, le système comprend un circuit de retour d'additif permettant à l'additif contenu dans la chambre de retourner dans le réservoir lorsque l'équipage mobile se déplace selon l'autre sens de coulissement.

Comme expliqué précédemment, l'équipage mobile permet de délimiter un premier volume et un deuxième volume dans la chambre. Lors de la purge, c'est- à-dire lorsque l'équipage mobile se déplace selon l'autre sens de coulissement (course retour), le deuxième volume dans la chambre augmente et le premier volume dans la chambre diminue. Le deuxième volume se remplit avec de l'additif provenant du canal d'injection et l'équipage mobile pousse l'additif contenu dans le premier volume vers le réservoir, via le circuit de retour prévu à cet effet.

Dans un premier mode de réalisation, la pompe présente un débit de fuite prédéterminé. Dès lors, l'additif contenu dans (le premier volume de) la chambre peut retourner dans le réservoir via la pompe elle-même. Par exemple, un tel débit de fuite peut être déterminé en fonction du temps qui est octroyé pour le remplissage du deuxième volume la chambre après ouverture de l'injecteur.

Dans un deuxième mode de réalisation, le circuit de retour d'additif comprend une ligne de dérivation (by pass). Dès lors, l'additif contenu dans (le premier volume de) la chambre peut retourner dans le réservoir via une telle ligne de dérivation. Cette ligne de dérivation permet donc de by-passer la pompe.

Avantageusement, la pompe est une pompe unidirectionnelle, c'est-à-dire qui fonctionne pour créer un débit dans un sens donné (celui de l'alimentation en additif). Ce type de pompe est peu onéreux et sa commande est simple.

La présente invention concerne également un procédé pour le stockage et l'injection d'un additif dans un tuyau d'échappement d'un moteur à combustion interne, le procédé consistant essentiellement à véhiculer un additif stocké dans un réservoir vers un injecteur à l'aide d'une pompe et via un canal d'injection, et à l'injecter dans le tuyau d'échappement à l'aide de l'injecteur. Le procédé consiste également à purger le canal d'injection par le déplacement d'un équipage mobile à piston monté coulissant dans une chambre, le déplacement de l'équipage mobile dans la chambre étant susceptible de créer une aspiration au sein de la chambre qui se traduit par une remontée dans la chambre d'au moins une partie de l'additif contenu dans le canal d'injection.

Ce procédé est avantageusement utilisé dans le cas où l'additif est une solution aqueuse d'urée.

Selon un mode de réalisation particulier, la purge comprend successivement et dans l'ordre les étapes suivantes:
a) on démarre la pompe de manière à déplacer l'équipage mobile selon l'un des sens de coulissement ;
b) on arrête la pompe de manière à autoriser l'équipage mobile à se déplacer de lui-même selon l'autre sens de coulissement ;
c) on ouvre l'injecteur pour admettre de l'air dans le canal d'injection, de sorte que l'équipage mobile continue à se déplacer selon l'autre sens de coulissement.

Avantageusement, l'additif contenu dans le canal d'injection est aspiré dans la chambre pendant les étapes b) et c).

D'autres caractéristiques et avantages de l'invention apparaîtront à la lecture de la description suivante, donnée à titre d'exemple indicatif et non limitatif, et des dessins annexés, dans lesquels :
- la figure 1 illustre schématiquement un système SCR comprenant un dispositif de purge, selon un mode de réalisation particulier de l'invention ;
- les figures 2a à 2d illustrent schématiquement un premier mode de réalisation du dispositif de purge de la figure 1 ; et
- les figures 3a à 3d illustrent schématiquement un deuxième mode de réalisation du dispositif de purge de la figure 1.

Dans ces figures, des numéros identiques désignent des éléments identiques.

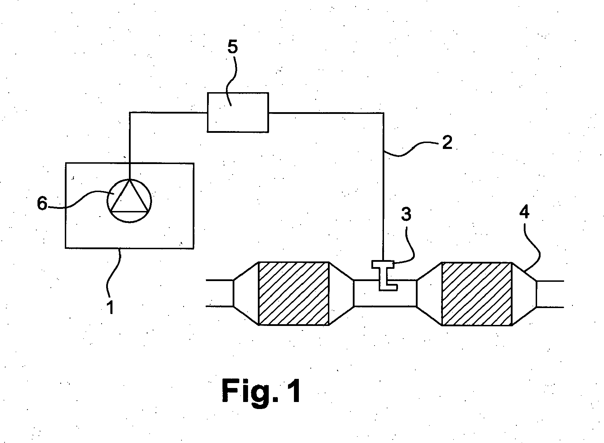

La figure 1 illustre un exemple de réalisation d'un système SCR. Par «système SCR», on entend désigner un système de réduction catalytique des NOx des gaz d'échappement d'un moteur à combustion interne, de préférence d'un véhicule, utilisant, par exemple, de l'urée comme précurseur d'ammoniac liquide.

Dans l'exemple de la figure 1, le système SCR comprend un réservoir à additif 1 contenant une solution aqueuse d'urée à 32.5% en poids d'urée (eutectique), une pompe 6 disposée à l'intérieur du réservoir 1, un dispositif de purge 5 connecté à la pompe 6, et un canal d'injection 2 (ou ligne d'injection) allant du dispositif de purge 5 vers un injecteur 3 situé au niveau d'un tuyau d'échappement 4. Avantageusement, la pompe 6 est une pompe unidirectionnelle. Bien entendu, dans une variante de réalisation, la pompe 6 peut être une pompe bidirectionnelle.

En mode de fonctionnement normal (injection d'additif), la pompe 6 provoque un débit d'additif du réservoir 1 vers l'injecteur 3, via le dispositif de purge 5 et le canal d'injection 2, puis cet additif est injecté dans les gaz d'échappement au moyen de l'injecteur 3. Ainsi dans le mode de fonctionnement normal, le dispositif de purge 5 est configuré pour laisser passer l'additif fourni par la pompe 6 vers le canal d'injection 2. Lors d'une purge, on arrête la pompe 6 et le dispositif de purge 5 aspire l'additif contenu dans l'injecteur et dans le canal d'injection 2.

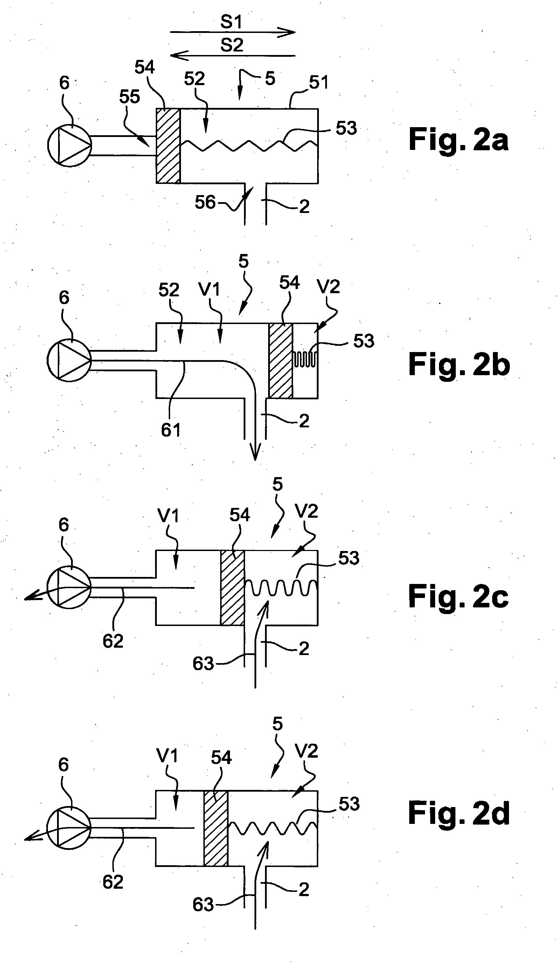

On décrit maintenant en relation avec les figures 2a à 2d un premier mode de réalisation du dispositif de purge 5 de la figure 1.

Comme illustré sur la figure 2a, le dispositif de purge 5 comprend un boîtier 51 délimitant une chambre 52 dans laquelle est logé un équipage mobile à piston (53, 54). Le boîtier 51 comprend un port d'entrée 55 et un port de sortie 56.

L'équipage mobile (53, 54) est monté coulissant dans la chambre 52. La chambre 52 communique avec la pompe 6 via le port d'entrée 55. La chambre 52 communique également avec le canal d'injection 2 via le port de sortie 56.

L'équipage mobile (53, 54) est susceptible d'effectuer une course aller suivant un premier sens de c oulissement (représenté par la flèche numérotée S1) et une course retour suivant un deuxième sens de coulissement (représenté par la flèche numérotée S2).

Dans l'exemple de la figure 2a, l'équipage mobile comprend un piston 54 monté coulissant dans la chambre à l'encontre d'un ressort 53. Le ressort 53 comprend une extrémité solidaire du piston 54 et une autre extrémité solidaire du boîtier 51.

Préférentiellement, le piston 54 est étanche. Sur la figure 2a, le piston 54 occupe une position où il bloque la communication fluidique entre le port d'entrée 55 et le port de sortie 56.
Lorsque la pompe 6 est mise en marche l'additif pénètre dans la chambre 52, via le port d'entrée 55, et pousse le piston 54 selon le premier sens de coulissement (S1). Le déplacement du piston 54 selon le premier sens de coulissement (S1) entraîne la contraction du ressort 53 (le ressort accumule de l'énergie).
Comme illustré sur la figure 2b, en mode de fonctionnement normal (injection d'additif), le piston 54 est déplacé jusqu'à une position où il libère la communication fluidique entre le port d'entrée 55 et le port de sortie 56. De l'additif peut donc circuler vers le canal d'injection 2, via la chambre 52. Le passage emprunté par l'additif consiste alors en une portion de la chambre 52 et le port de sortie 56. Cette circulation d'additif est schématiquement représentée sur la figure 2b par la flèche 61. Comme illustré, le ressort 53 est comprimé et le piston 54 délimite un premier volume V1 et un deuxième volume V2 dans la chambre 52.

Dans l'exemple de réalisation illustré sur les figures 2a à 2d, on suppose que la pompe 6 présente un débit de fuite. Par exemple, la pompe 6 peut avoir un débit de fuite à 5bar compris entre 0,10 l/h et 0,80 l/h.

Pour amorcer la purge, on arrête la pompe 6. Le piston 54 n'étant plus soumis à la force de poussée exercée par la distribution d'additif, le ressort 53 tend à reprendre sa forme d'origine (le ressort restitue l'énergie accumulée). Le piston 54 est alors déplacé (sous l'action de poussée du ressort) suivant le deuxième sens de coulissement (S2). Ce déplacement est rendu possible grâce au débit de fuite de la pompe 6. En effet, un tel débit de fuite permet le retour dans le réservoir de l'additif contenu dans le premier volume V1. Ce retour d'additif se fait donc à travers la pompe. Ce retour d'additif est schématiquement représenté sur la figure 2c par la flèche 62. Pendant le déplacement du piston 54 suivant le deuxième sens de coulissement (S2), le deuxième volume V2 augmente et le premier volume V1 diminue. L'augmentation du deuxième volume V2 créée une aspiration au sein de la chambre. Ainsi, l'additif contenu dans le canal d'injection 2 remonte dans le deuxième volume V2, sous l'effet de l'aspiration.
Cette remontée d'additif est schématiquement représentée sur la figure 2c par la flèche 63.

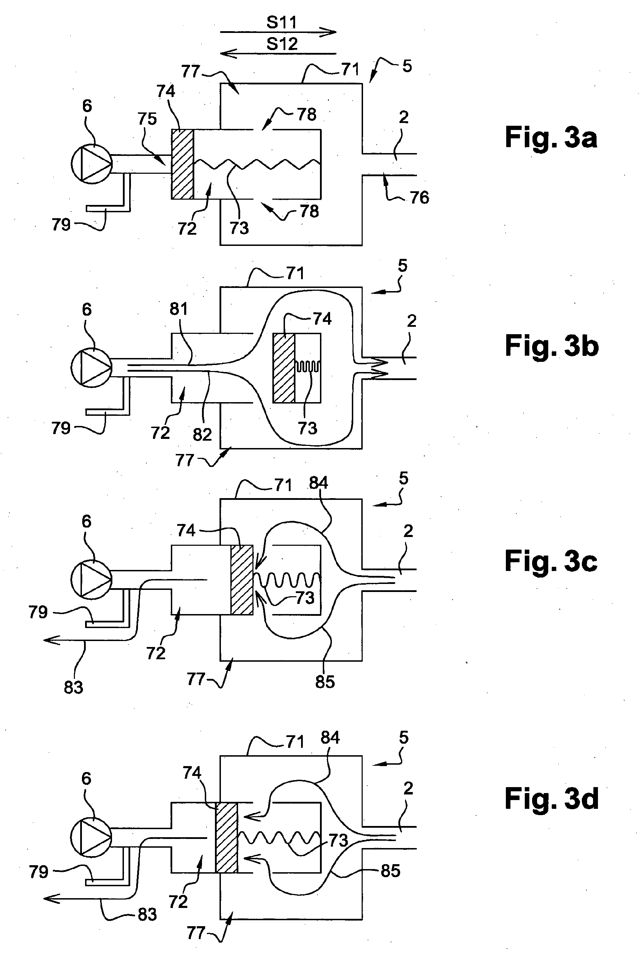

Ensuite, on ouvre l'injecteur. Comme illustré sur la figure 2d, le piston 54 continue alors son déplacement suivant le deuxième sens de coulissement (S2) et l'aspiration au sein de la chambre continue. De l'air est ainsi aspiré dans l'injecteur et dans une partie du canal d'injection 2. Le volume d'air aspiré est sensiblement égal au volume V1 déplacé par le piston 54. Le débit d'aspiration de l'air est sensiblement égal au débit de fuite de la pompe 6.
On décrit maintenant en relation avec les figures 3a à 3d un deuxième mode de réalisation du dispositif de purge 5 de la figure 1.

Comme illustré sur la figure 3a, le dispositif de purge 5 comprend un boîtier 71 muni d'un port d'entrée 75 et d'un port de sortie 76. Le boîtier 71 comprend une première chambre 72 dans laquelle est logé un équipage mobile à piston (73, 74).

L'équipage mobile comprend un piston 74 monté coulissant dans la première chambre 72 à l'encontre d'un ressort 73. Le piston 74 est susceptible d'effectuer une course aller suivant un premier sens de coulissement (représenté par la flèche numérotée S11) et une course retour suivant un deuxième sens de coulissement (représenté par la flèche numérotée S12). La première chambre 72 communique avec la pompe 6 via le port d'entrée 75. Le boîtier 71 comprend également une deuxième chambre 77. Une partie de la première chambre 72 s'étend à l'intérieur de la deuxième chambre 77. La première chambre 72 communique avec la deuxième chambre 77 via des orifices 78. La deuxième chambre 77 communique avec le canal d'injection 2 via le port de sortie 76. Dans une variante de réalisation, la deuxième chambre 77 peut aussi être une partie du canal d'injection 2.

Dans l'exemple de réalisation illustré sur les figures 3a à 3d, on suppose que le système SCR comprend une ligne 79 de dérivation (by pass) permettant un retour d'additif dans le réservoir. La ligne 79 de dérivation est munie d'un orifice calibré (non représenté).

Dans ce deuxième mode de réalisation, la pompe 6 peut en outre présenter un débit de fuite. La pompe 6 peut alternativement ne pas présenter de débit de fuite.

Préférentiellement, le piston 74 est étanche. Sur la figure 3a, le piston 74 occupe une position où il bloque la communication fluidique entre la première chambre 72 et la deuxième chambre 77.

Lorsque la pompe 6 est mise en marche l'additif pénètre dans la première chambre 72, via le port d'entrée 75, et pousse le piston 74 selon le premier sens de coulissement (S11). Le déplacement du piston 74 selon le premier sens de coulissement (S11) entraîne la contraction du ressort 73 (le ressort accumule de l'énergie).
Comme illustré sur la figure 3b, en mode de fonctionnement normal (injection d'additif), la pompe 6 (qui est en marche) distribue l'additif du réservoir. Le piston 74 est soumis à une force de poussée exercée par la distribution d'additif. Le piston 74 est alors déplacé suivant le premier sens de coulissement (S11). Le piston 74 est déplacé jusqu'à une position où il libère la communication fluidique entre la première chambre 72 et la deuxième chambre 77. De l'additif peut donc circuler vers le canal d'injection 2, via les première 72 et deuxième 77 chambres. Le passage emprunté par l'additif consiste alors en une portion de la première chambre 72, les orifices 78, une portion de la deuxième chambre 77, et le port de sortie 76.
Cette circulation d'additif est schématiquement représentée sur la figure 3b par les flèches 81 et 82. Comme illustré, le ressort 73 est comprimé.

Pour amorcer la purge, on arrête la pompe 6. Le piston 74 n'étant plus soumis à la force de poussée exercée par la distribution d'additif, le ressort 73 tend à reprendre sa forme d'origine (le ressort restitue l'énergie accumulée). Le piston 74 est alors déplacé (sous l'action de poussée du ressort) suivant le deuxième sens de coulissement (S12). Ce déplacement est rendu possible grâce à la ligne 79 de dérivation. En effet, une telle ligne 79 de dérivation permet le retour dans le réservoir de l'additif contenu dans la première chambre 72 (dans le cas où la pompe 6 ne présente pas de débit de fuite). Ce retour d'additif est schématiquement représenté sur la figure 3c par la flèche 83.

Le déplacement du piston 74 suivant le deuxième sens de coulissement (S12) crée une aspiration au sein du dispositif de purge. Ainsi, l'additif contenu dans le canal d'injection 2 remonte dans le dispositif de purge. Cette remontée d'additif est schématiquement représentée sur la figure 3c par les flèches 84 et 85.

Ensuite, on ouvre l'injecteur. Comme illustré sur la figure 3d, le piston 74 continue alors son déplacement suivant le deuxième sens de coulissement (S12) et l'aspiration d'additif au sein du dispositif de purge continue. De cette façon, la purge du canal d'injection et de l'injecteur est réalisée efficacement et de manière automatique (c'est-à-dire sans signal de contrôle).
Par rapport à des dispositifs de purge connus pour ce type de système, le dispositif de purge de l'invention met en oeuvre des moyens mécaniques d'une grande simplicité, peu onéreux et fiables.

## Revendications

1. Système pour le stockage et l'injection d'un additif dans les gaz d'échappement d'un moteur à combustion interne, ledit système comprenant un réservoir (1) pour le stockage de l'additif, un injecteur (3) et une pompe (6) pour véhiculer l'additif du réservoir (1) à l'injecteur (3) via un canal d'injection (2), ledit système comprenant également un dispositif de purge (5) monté entre la pompe (6) et le canal d'injection (2), **caractérisé en ce que** le dispositif de purge comprend une chambre (52 ; 72) et un équipage mobile à piston (53, 54 ; 73, 74) monté coulissant dans la chambre, le dispositif de purge (5) étant conçu de sorte que :
- le mouvement de l'équipage mobile selon l'un des sens de coulissement (S1 ; S11) entraîne l'ouverture dans la chambre d'un passage pour l'additif vers le canal d' i n jection, et
- le mouvement de l'équipage mobile selon l'autre sens de coulissement (S2 ; S12) crée une aspiration au sein de la chambre qui se traduit par une remontée dans la chambre d'au moins une partie de l'additif contenu dans le canal d'injection.

2. Système selon la revendication précédente, **caractérisé en ce que** le mouvement de l'équipage mobile selon l'autre sens de coulissement ferme ledit passage.

3. Système selon l'une quelconque des revendications précédentes, **caractérisé en ce que** le mouvement de l'équipage mobile selon l'autre sens de coulissement est amorcé dans un premier temps par l'arrêt de la pompe, puis dans un deuxième temps par l'ouverture de l'injecteur.

4. Système selon l'une quelconque des revendications précédentes, **caractérisé en ce que** l'équipage mobile comprend un piston monté coulissant dans la chambre à l'encontre d'un ressort.

5. Système selon la revendication précédente, **caractérisé en ce que** l'ensemble formé par le piston et le ressort est dimensionné de telle sorte qu'il compense les pulsations pouvant être générées par la pompe et/ou l'injecteur.

6. Système selon l'une quelconque des revendications précédentes, **caractérisé en ce qu'il** comprend un circuit de retour d'additif permettant à l'additif contenu dans la chambre de retourner dans le réservoir lorsque l'équipage mobile se déplace selon l'autre sens de coulissement.

7. Système selon la revendication précédente, **caractérisé en ce que** la pompe présente un débit de fuite.

8. Système selon la revendication 6 ou 7, **caractérisé en ce que** le circuit de retour d'additif comprend une ligne de dérivation (by pass).

9. Système selon l'une quelconque des revendications précédentes, **caractérisé en ce que** la pompe est une pompe unidirectionnelle.

10. Système selon l'une quelconque des revendications précédentes, **caractérisé en ce que** l'additif est une solution aqueuse d'urée.

11. Procédé pour le stockage et l'injection d'un additif dans un tuyau d'échappement d'un moteur à combustion interne, ledit procédé permettant de véhiculer un additif stocké dans un réservoir (1) vers un injecteur (3) à l'aide d'une pompe (6) et via un canal d'injection (2), et à l'injecter dans le tuyau d'échappement à l'aide de l'injecteur (3), **caractérisé en ce que** ledit procédé permet également de purger le canal d'injection (2) par le déplacement d'un équipage mobile à piston (53, 54 ; 73, 74) monté coulissant dans une chambre (52 ; 72), le déplacement de l'équipage mobile dans la chambre étant susceptible de créer une aspiration au sein de la chambre qui se traduit par une remontée dans la chambre d'au moins une partie de l'additif contenu dans le canal d'injection (2), et le mouvement dudit équipage mobile selon l'un des sens de coulissement (S1 ; S11) entraîne l'ouverture dans la chambre d'un passage pour l'additif vers le canal d'injection.

12. Procédé selon la revendication précédente, **caractérisé en ce que** la purge comprend successivement et dans l'ordre les étapes suivantes:
a) on démarre la pompe de manière à déplacer l'équipage mobile selon l'un des sens de coulissement ;
b) on arrête la pompe de manière à autoriser l'équipage mobile à se déplacer selon l'autre sens de coulissement ;
c) on ouvre l'injecteur pour admettre de l'air dans le canal d'injection, de sorte que l'équipage mobile continue à se déplacer selon l'autre sens de coulissement ; et **en ce qu'**une partie de l'additif contenu dans le canal d'injection est aspiré dans la chambre .

## Patentansprüche

1. System zum Bevorraten und Einspritzen eines Zusatzmittels in die Abgase eines Verbrennungsmotors, wobei das System einen Tank (1) zum Bevorraten des Zusatzmittels, ein Einspritzelement (3) und eine Pumpe (6) aufweist, um das Zusatzmittel vom Tank (1) zum Einspritzelement (3) über einen Einspritzkanal (2) zu transportieren, wobei das System ferner eine Entlüftungsvorrichtung (5) aufweist, die zwischen der Pumpe (6) und dem Einspritzkanal (2) gelagert ist, **dadurch gekennzeichnet, dass** die Entlüftungsvorrichtung eine Kammer (52; 72) und ein bewegliches Kolbenorgan (53, 54; 73, 74) aufweist, das in der Kammer verschiebbar gelagert ist, wobei die Entlüftungsvorrichtung (5) dergestalt ausgebildet ist, dass
- die Bewegung des beweglichen Organs in einer der Schieberichtungen (S1; S11) in der Kammer das Öffnen eines Durchlasses für das Zusatzmittel zu dem Einspritzkanal hin bewirkt, und
- die Bewegung des beweglichen Organs in der anderen Schieberichtung (S2; S12) eine Ansaugung im Innern der Kammer erzeugt, die sich durch ein Aufsteigen mindestens eines Teils des in dem Einspritzkanal enthaltenen Zusatzmittels in die Kammer niederschlägt.

2. System nach dem vorhergehenden Anspruch, **dadurch gekennzeichnet, dass** die Bewegung des beweglichen Organs in der anderen Schieberichtung den Durchlass schließt.

3. System nach einem der vorhergehenden Ansprüche, **dadurch gekennzeichnet, dass** die Bewegung des beweglichen Organs in der anderen Schieberichtung in einem ersten Schritt durch das Anhalten der Pumpe und dann in einem zweiten Schritt durch das Öffnen des Einspritzelements ausgelöst wird.

4. System nach einem der vorhergehenden Ansprüche, **dadurch gekennzeichnet, dass** das bewegliche Organ einen Kolben aufweist, der in der Kammer gegen eine Feder verschiebbar gelagert ist.

5. System nach dem vorhergehenden Anspruch, **dadurch gekennzeichnet, dass** die aus dem Kolben und der Feder gebildete Einheit derart dimensioniert ist, dass sie die Schwingungen, die durch die Pumpe und/oder das Einspritzelement erzeugt werden können, kompensiert.

6. System nach einem der vorhergehenden Ansprüche, **dadurch gekennzeichnet, dass** es einen Kreislauf für den Zusatzmittelrücklauf aufweist, der dem in der Kammer enthaltenen Zusatzmittel den Rücklauf in den Tank gestattet, wenn das bewegliche Organ sich in der anderen Schieberichtung bewegt.

7. System nach dem vorhergehenden Anspruch, **dadurch gekennzeichnet, dass** die Pumpe eine Leckrate aufweist.

8. System nach Anspruch 6 oder 7, **dadurch gekennzeichnet, dass** der Kreislauf für den Zusatzmittelrücklauf eine Abzweigleitung (Bypass) aufweist.

9. System nach einem der vorhergehenden Ansprüche, **dadurch gekennzeichnet, dass** die Pumpe eine unidirektionale Pumpe ist.

10. System nach einem der vorhergehenden Ansprüche, **dadurch gekennzeichnet, dass** das Zusatzmittel eine wässrige Urea-Lösung ist.

11. Verfahren zum Bevorraten und Einspritzen eines Zusatzmittels in ein Abgasrohr eines Verbrennungsmotors, wobei das Verfahren das Transportieren eines in dem Behälter (1) bevorrateten Zusatzmittels mit Hilfe einer Pumpe (6) und über einen Einspritzkanal (2) zu einem Einspritzelement (3) hin und das Einspritzen in das Abgasrohr mit Hilfe des Einspritzelements (3) gestattet, **dadurch gekennzeichnet, dass** das Verfahren ferner das Entlüften des Einspritzkanals (2) durch die Bewegung eines beweglichen Kolbenorgans (53, 54; 73, 74) gestattet, das in einer Kammer (52; 72) verschiebbar gelagert ist, wobei die Bewegung des beweglichen Kolbenorgans in der Kammer eine Ansaugung im Innern der Kammer erzeugen kann, die sich durch ein Aufsteigen mindestens eines Teils des in dem Einspritzkanal (2) enthaltenen Zusatzmittels in die Kammer niederschlägt, und die Bewegung des beweglichen Organs in einer der Schieberichtungen (S1; S11) in der Kammer das Öffnen eines Durchlasses für das Zusatzmittel zu dem Einspritzkanal hin bewirkt.

12. Verfahren nach dem vorhergehenden Anspruch, **dadurch gekennzeichnet, dass** das Entlüften nacheinander und in der Reihenfolge die folgenden Schritte umfasst:
a) Die Pumpe wird gestartet, so dass das bewegliche Organ in einer der Schieberichtungen bewegt wird;
b) die Pumpe wird angehalten, so dass dem beweglichen Organ gestattet wird, sich in die andere Schieberichtung zu bewegen;
c) das Einspritzelement wird geöffnet, um Luft in den Einspritzkanal einzulassen, so dass das bewegliche Organ seine Bewegung in die andere Schieberichtung fortsetzt und ein Teil des in dem Einspritzkanal enthaltenen Zusatzmittels in die Kammer angesaugt wird.

## Claims

1. System for storing an additive and injecting it into the exhaust gases of an internal combustion engine, the said system comprising a reservoir (1) for storing the additive, an injector (3) and a pump (6) for conveying the additive from the reservoir (1) to the injector (3) via an injection duct (2), the said system also comprising a purge device (5) mounted between the pump (6) and the injection duct (2), **characterized in that** the purge device comprises a chamber (52; 72) and moving gear comprising a piston (53, 54; 73, 74) slidably mounted in the chamber, the purge device (5) being designed so that:
- the movement of the moving gear in one of the directions of sliding (S1; S11) causes a passage for the additive leading towards the injection duct to open in the chamber, and
- the movement of the moving gear in the other direction of sliding (S2; S12) creates suction within the chamber which results in at least some of the additive contained in the injection duct to return to the chamber.

2. System according to the preceding claim, **characterized in that** the movement of the moving gear in the other direction of sliding closes the said passage.

3. System according to either one of the preceding claims, **characterized in that** the movement of the moving gear in the other direction of sliding is initiated first by the stopping of the pump and then by the opening of the injector.

4. System according to any one of the preceding claims, **characterized in that** the moving gear comprises a piston slidably mounted in the chamber against the action of a spring.

5. System according to the preceding claim, **characterized in that** the assembly formed by the piston and the spring is dimensioned such that it compensates for any pulsation that the pump and/or the injector might generate.

6. System according to any one of the preceding claims, **characterized in that** it comprises an additive return circuit allowing the additive contained in the chamber to return to the reservoir when the moving gear moves in the other direction of sliding.

7. System according to the preceding claim, **characterized in that** the pump has a leakage flow.

8. System according to Claim 6 or 7, **characterized in that** the additive return circuit comprises a bypass line.

9. System according to any one of the preceding claims, **characterized in that** the pump is a one-way pump.

10. System according to any one of the preceding claims, **characterized in that** the additive is an aqueous urea solution.

11. Method for storing an additive and injecting it into an exhaust pipe of an internal combustion engine, the said method allowing an additive stored in a reservoir (1) to be conveyed to an injector (3) using a pump (6) and via an injection duct (2) and allowing it to be injected into the exhaust pipe using the injector (3), **characterized in that** the said method also allows the injection duct (2) to be purged by the movement of moving gear comprising a piston (53, 54;73, 74) slidably mounted in a chamber (52; 72), the movement of the moving gear in the chamber being able to create suction within the chamber which results in at least some of the additive contained in the injection duct (2) being returned to the chamber, and the movement of the said moving gear in one of the directions of sliding (S1; S11) causes a passage for the additive leading towards the injection duct to open in the chamber.

12. Method according to the preceding claim, **characterized in that** purge involves the following steps in succession in this order:
a) the pump is started so as to move the moving gear in one of the directions of sliding;
b) the pump is stopped so as to allow the moving gear to move in the other direction of sliding;
c) the injector is opened to admit air into the injection duct so that the moving gear continues to move in the other direction of sliding; and **in that** some of the additive contained in the injection duct is sucked into the chamber.
